# EUROPÄISCHE PATENTANMELDUNG

(11) **EP 4 699 730 A1**
(43) Veröffentlichungstag der Anmeldung: **25.02.2026**
(21) Anmeldenummer: 25151282.8
(22) Anmeldetag: 10.01.2025
(51) Int. Cl.: B23K 26/03, B23K 26/24, H02K 15/33, B23K 101/38, B23K 103/12

(54) **VERFAHREN UND VORRICHTUNG ZUM VERSCHWEISSEN VON LEITERENDEN**

(30) Priorität: 21.08.2024 DE 102024002711
(71) Anmelder: Grob-Werke GmbH & Co. KG, 87719 Mindelheim (DE)
(72) Erfinder: Schmid, Valentin, 87719 Mindelheim (DE); Schürer, René, 86415 Mering (DE)
(74) Vertreter: KASTEL Patentanwälte PartG mbB

(57) **Zusammenfassung**

Die Erfindung betrifft ein Schweißverfahren zum Verschweißen von in einer Leiterendengruppe (64) gruppierten Leiterenden (24, 24.1, 24.2) eines Bauteils (26) für eine elektrische Maschine, wobei zumindest ein erstes Leiterende (24, 24.1) der Leiterendengruppe (64) und ein zweites Leiterende (24, 24.2) der Leiterendengruppe (64) in einem Fügebereich (66) der Leiterendengruppe (64), wo das erste Leiterende (24.1) und das zweite Leiterende (24.2) nebeneinander liegen, zusammenzufügen sind. Zur Verbesserung der Qualität der Verschweißung wird vorgeschlagen, dass das Schweißverfahren die Schritte umfasst:
a) Richten eines Schweißstrahls (68) auf den Fügebereich (66) der Leiterendengruppe (64), um ein Schmelzbad (70) zu erzeugen, und
b) Verfahren des Schweißstrahles (68) aus dem Fügebereich (66) heraus in einen Randbereich (72) der Leiterendengruppe (64) und dortiges Beenden der Emission des Schweißstrahles (64).

## Beschreibung

Die Erfindung betrifft ein Schweißverfahren zum Verschweißen von in einer Leiterendengruppe gruppierten Leiterenden eines Bauteils für eine elektrische Maschine. Weiter betrifft ein Herstellverfahren zum Herstellen einer Spulenwicklung eines Hairpin-Stators unter Verwendung eines solchen Schweißverfahrens. Weiter betrifft die Erfindung eine Schweißvorrichtung zum Verschweißen von in einer Leiterendengruppe gruppierten Leiterenden eines Bauteils für eine elektrische Maschine. Weiter betrifft die Erfindung eine Herstellanlage zum Herstellen eines Hairpin-Stators, die eine solche Schweißvorrichtung aufweist. Schließlich betrifft die Erfindung ein Computerprogramm mit Anweisungen zum Durchführen des Schweißverfahrens.

Einige Ausführungsformen der Erfindung betreffen ein im Zuge der Serienfertigung für ein Bauteil einer elektrischen Maschine durchzuführendes Verfahren zum Verschweißen von Leiterenden, die an dem Bauteil in einer Leiterendenanordnung angeordnet sind.

Verfahren und Vorrichtungen gemäß Ausführungsformen der Erfindung sollen insbesondere bei der Fertigung von Flachdrahtstatoren, insbesondere Hairpin-Statoren eingesetzt werden. Bei Hairpin-Statoren wird die Spulenwicklung aus einer Vielzahl von Haarnadel-ähnlich gebogener Leiterabschnitte (Hairpins genannt) gebildet, die zwei Schenkel mit freien Leiterenden aufweisen, die durch einen dachartig gebogenen Bereich miteinander verbunden sind. Die Hairpins werden in Statornuten eingesetzt, und anschließend wird die Spulenwicklung durch meist paarweises Verschweißen von Leiterenden gebildet. Einige Ausführungsformen der Erfindung betreffen ein solches Verschweißen von Leiterenden, bei denen auch eine Detektion der Positionen der Leiterenden im Zuge des Verschweißvorganges erfolgt.

Zum technologischen Hintergrund und zum Stand der Technik wird insbesondere auf folgende Literaturstellen verwiesen, die durch Bezugnahme integriert sind und Teil der hiesigen Offenbarung darstellen:
[1] EP 3 750 231 B1
[2] EP 3 533 134 A1
[3] EP 3 797 918 B1
[4] EP 3 865 242 B1
[5] EP 4 104 963 B1
[6] Wikipedia: Elektronenstrahl-Materialbearbeitung; heruntergeladen am 26.04.2024 unter https://de.wikipedia.org/wiki/Elektronenstrahl-Materialbearbeitung

Aus [1] sind eine Herstellanlage für einen Hairpin-Stator sowie ein Herstellverfahren zum Herstellen der Spulenwicklung eines solchen Hairpin-Stators bekannt. Dabei werden Leiterenden mittels eines Schweißverfahrens verschweißt. [2] offenbart eine Schweißschablone, die bei dem Schweißverfahren verwendbar ist. [3] bis [5] offenbaren Schweißverfahren und Schweißvorrichtungen mit den Merkmalen des Oberbegriffs der unabhängigen Ansprüche.

Die Erfindung hat sich zur Aufgabe gestellt, das Verschweißen von in einer Leiterendengruppe gruppierte Leiterenden eines Bauteils für eine elektrische Maschine - insbesondere hinsichtlich Zuverlässigkeit und/oder Qualität der Schweißverbindung - zu verbessern.

Zum Lösen dieser Aufgabe schafft die Erfindung ein Schweißverfahren gemäß Anspruch 1. Ein Herstellverfahren zum Herstellen einer Spulenwicklung eines Hairpin-Stators unter Verwendung eines solchen Schweißverfahrens, eine Schweißvorrichtung zum Durchführen des Schweißverfahrens, eine solche aufweisende Herstellanlage für einen Hairpin-Stator sowie ein Computerprogrammprodukt mit Anweisungen zum Durchführen des Schweißverfahrens sind Gegenstand der Nebenansprüche.

Vorteilhafte Ausgestaltungen sind Gegenstand der Unteransprüche.

Die Erfindung schafft gemäß einem ersten Aspekt davon ein Schweißverfahren zum Verschweißen von in einer Leiterendengruppe gruppierten Leiterenden eines Bauteils für eine elektrische Maschine, wobei zumindest ein erstes Leiterende der Leiterendengruppe und ein zweites Leiterende der Leiterendengruppe in einem Fügebereich der Leiterendengruppe, wo das erste Leiterende und das zweite Leiterende nebeneinander liegen, zusammenzufügen sind, wobei das Schweißverfahren die Schritte umfasst:
a) Richten eines Schweißstrahls auf den Fügebereich der Leiterendengruppe, um ein Schmelzbad zu erzeugen, und
b) Verfahren des Schweißstrahles aus dem Fügebereich heraus in einen Randbereich der Leiterendengruppe und dortiges Beenden der Emission des Schweißstrahles.

Bei einigen Ausführungsformen umfasst das Schweißverfahren den Schritt: Positionierung der zu verschweißenden Leiterenden der Leiterendengruppe durch Verspannen mittels einer Spannschablone.

Bei einigen Ausführungsformen des Schweißverfahrens wird als Schweißstrahl ein Laserstrahl auf die Leiterendengruppe gerichtet.

Bei einigen Ausführungsformen umfasst Schritt a):
Abfahren des Fügebereichs mittels des Schweißstrahls, wobei der Fügebereich elliptisch, polygonförmig, insbesondere rechteckförmig, mehrzonig oder linienförmig ist.

Bei einigen Ausführungsformen umfasst Schritt b) den Schritt:
b1.1) Verfahren des Schweißstrahls in einen Eckbereich der Leiterendengruppe.

Bei einigen Ausführungsformen umfasst Schritt b) den Schritt:
b1.2) Verfahren des Schweißstrahls in einen Randbereich des Schmelzbads.

Bei einigen Ausführungsformen umfasst Schritt b) den Schritt:
b1.3) Verfahren des Schweißstrahls in einen Randbereich eines Leiterendes der Leiterendengruppe.

Bei einigen Ausführungsformen umfasst Schritt b) den Schritt:
b1.4) Verfahren des Schweißstrahls in einen Randbereich einer Endfläche eines Leiterendes der Leiterendengruppe.

Bei einigen Ausführungsformen umfasst Schritt b) den Schritt:
b1.5) Verfahren des Schweißstrahls auf eine Kante eines Leiterendes.

Bei einigen Ausführungsformen umfasst Schritt b) den Schritt:
b1.6) Verfahren des Schweißstrahls so, dass dieser auf einer Seitenfläche der Leiterendengruppe, insbesondere eines Leiterendes derselben, auftrifft.

Bei einigen Ausführungsformen umfasst Schritt b) den Schritt:
b1.7) Verfahren des Schweißstrahls so, dass dieser außerhalb der Leiterendengruppe auf eine Spannschablone auftrifft.

Bei einigen Ausführungsformen umfasst Schritt b) den Schritt:
b1.8) Verfahren des Schweißstrahls so, dass dieser außerhalb der Leiterendengruppe auf ein dafür angebrachtes Opferblech trifft.

Bei einigen Ausführungsformen umfasst Schritt b) den Schritt:
b2.1) Einfahren einer Blende in den Schweißstrahl.

Bei einigen Ausführungsformen umfasst Schritt b) den Schritt:
b2.2) Abschalten des Schweißstrahls.

Einige Ausführungsformen des Verfahrens umfassen das Wiederholen der Schritte a) und b) zum Verschweißen von Leiterenden einer weiteren Leiterendengruppe des Bauteils.

Insbesondere werden bei einigen Ausführungsformen die Schritte so oft wiederholt, bis alle zu verschweißenden Leiterenden des Bauteils verschweißt sind.

Bei einigen Ausführungsformen umfasst das Schweißverfahren den vor Schritt a) durchzuführenden Schritt:
0) Erkennen von Position und/oder Anordnung der zu verschweißenden Leiterenden der Leiterendengruppe.

Einige Ausführungsformen des Schweißverfahrens umfassen weiter den Schritt:
1) Bestimmen des Orts des Beendens der Emission des Schweißstrahls abhängig der in Schritt 0) erkannten Position und/oder Anordnung.

Bei einigen Ausführungsformen umfasst Schritt 0) den Schritt:
01) Durchführen einer optischen Positionserkennung.

Bei einigen Ausführungsformen umfasst Schritt 0) den Schritt:
02) Durchführen einer kamerabasierten Positionserkennung.

Bei einigen Ausführungsformen umfasst Schritt 0) den Schritt:
03) Aufnahme eines Bildes zumindest eines Teilbereichs der Leiteranordnung und Durchführen einer Bildverarbeitung zur Erfassung der Position von zu verschweißenden Leiterendengruppen.

Bei einigen Ausführungsformen umfasst Schritt 0) den Schritt:
04) Durchführen einer kamerabasierten Detektion der Position von Leiterendengruppen mittels Kantendetektion basierend auf Kontrastunterschied.

Bei einigen Ausführungsformen umfasst Schritt 0) den Schritt:
05) Aufnahme eines Kamerabildes und Suche eines trainierten Musters, insbesondere basierend auf Kontrastunterschied.

Bei einigen Ausführungsformen umfasst Schritt 0) den Schritt:
06) Durchführen einer optischen Kohärenztomografie (OCT).

Bei einigen Ausführungsformen umfasst Schritt 0) den Schritt:
07) Detektion mittels Elektronenstrahl.

Gemäß einem weiteren Aspekt schafft die Erfindung ein Herstellverfahren zum Herstellen einer Spulenwicklung eines Hairpin-Stators, gekennzeichnet durch Bilden der Spulenwicklung aus einer Vielzahl von haarnadelförmigen Leiterabschnitten, wobei Leiterenden der Leiterabschnitte mittels eines Schweißverfahrens nach einer der voranstehenden Ausgestaltungen verbunden werden.

Gemäß einem weiteren Aspekt schafft die Erfindung eine Schweißvorrichtung zum Verschweißen von in einer Leiterendengruppe gruppierten Leiterenden eines Bauteils für eine elektrische Maschine, wobei zumindest ein erstes Leiterende der Leiterendengruppe und ein zweites Leiterende der Leiterendengruppe in einem Fügebereich der Leiterendengruppe, wo das erste Leiterende und das zweite Leiterende nebeneinander liegen, zusammenzufügen sind, wobei die Schweißvorrichtung umfasst:
eine Schweißeinrichtung, mit der ein Schweißstrahl auf die Leiterendenanordnung gerichtet werden kann, und eine Steuerung, die dazu eingerichtet ist, die Schweißeinrichtung zum Richten eines Schweißstrahls auf den Fügebereich der Leiterendengruppe, um ein Schmelzbad zu erzeugen, und zum Verfahren des Schweißstrahles aus dem Fügebereich heraus in einen Randbereich der Leiterendengruppe und zum dortigen Beenden der Emission des Schweißstrahles anzusteuern.

Bei einigen Ausführungsformen hat die Schweißvorrichtung eine Halterung für das Bauteil, aus dem die zu verbindenden Leiterenden in einer Leiterendenanordnung herausstehen.

Bei einigen Ausführungsformen hat die Schweißvorrichtung eine Schweißschablone zur Positionierung der Leiterenden.

Bei einigen Ausführungsformen hat die Schweißvorrichtung eine Positionserkennungseinrichtung, die zum Erkennen von Position und/oder Anordnung der zu verschweißenden Leiterenden der Leiterendengruppe eingerichtet ist.

Bei einigen Ausführungsformen ist die Positionserkennungseinrichtung zum Bestimmen der Position von vorbestimmten zu verschweißenden Leiterenden der Leiterendenanordnung ausgebildet. Bei einigen Ausführungsformen weist die Positionserkennungseinrichtung eine berührungslose Erfassungseinrichtung zum Erfassen der Position und eine computerimplementierte Auswerteinrichtung auf.

Bei einigen Ausführungsformen ist die berührungslose Erfassungseinrichtung eingerichtet zum Durchführen des Schritts:
01) Durchführen einer optischen Positionserkennung.

Bei einigen Ausführungsformen ist die berührungslose Erfassungseinrichtung eingerichtet zum Durchführen des Schritts:
02) Durchführen einer kamerabasierten Positionserkennung.

Bei einigen Ausführungsformen ist die berührungslose Erfassungseinrichtung eingerichtet zum Durchführen des Schritts:
03) Aufnahme eines Bildes zumindest eines Teilbereichs der Leiteranordnung und Durchführen einer Bildverarbeitung zur Erfassung der Position von zu verschweißenden Leiterendengruppen.

Bei einigen Ausführungsformen ist die berührungslose Erfassungseinrichtung eingerichtet zum Durchführen des Schritts:
04) Durchführen einer kamerabasierten Detektion der Position von Leiterendengruppen mittels Kantendetektion basierend auf Kontrastunterschied.

Bei einigen Ausführungsformen ist die berührungslose Erfassungseinrichtung eingerichtet zum Durchführen des Schritts:
05) Aufnahme eines Kamerabildes und Suche eines trainierten Musters, insbesondere basierend auf Kontrastunterschied.

Bei einigen Ausführungsformen ist die berührungslose Erfassungseinrichtung eingerichtet zum Durchführen des Schritts:
06) Durchführen einer optischen Kohärenztomografie (OCT).

Bei einigen Ausführungsformen ist die berührungslose Erfassungseinrichtung eingerichtet zum Durchführen des Schritts:
07) Detektion mittels Elektronenstrahl.

Die Schweißeinrichtung ist vorzugsweise dazu eingerichtet, den Schweißstrahl in Abhängigkeit von der durch die Positionsbestimmungseinrichtung bestimmten Position an den zu verschweißenden Leiterenden anzuordnen;
Bei einigen Ausführungsformen hat die Schweißvorrichtung eine Bestimmungseinrichtung, die zum Bestimmen des Orts des Beendens der Emission des Schweißstrahls, insbesondere in Abhängigkeit von der durch die Positionserkennungseinrichtung erkannten Position und/oder Anordnung, eingerichtet ist.

Bei einigen Ausführungsformen ist die Schweißeinrichtung ausgewählt aus der Gruppe, die eine Lasereinrichtung zum Richten eines Laserschweißstrahls auf die zu verschweißenden Leiterenden und eine Elektronenstrahlschweißeinrichtung zum Richten eines Elektronenstrahls auf die zu verschweißenden Leiterenden umfasst.

Bei einigen Ausführungsformen ist die Steuerung dazu ausgebildet, die Schweißeinrichtung zum Durchführen des Schweißverfahrens nach einer der voranstehenden Ausgestaltungen zu veranlassen.

Gemäß einem weiteren Aspekt schafft die Erfindung eine Herstellanlage zum Herstellen eines Hairpin-Stators, umfassend eine Schweißvorrichtung nach einer der voranstehenden Ausgestaltungen.

Gemäß einem weiteren Aspekt schafft die Erfindung ein Computerprogramm umfassend Anweisungen, die eine Schweißvorrichtung nach einer der voranstehenden Ausführungsformen dazu veranlassen, das Schweißverfahren nach einem der einer der voranstehenden Ausgestaltungen durchzuführen.

Einige besondere Vorteile bevorzugter Ausgestaltungen der Erfindung sowie einige technische Effekte der darin vorgesehenen Schritte oder Merkmale werden im Folgenden erläutert.

Einige bevorzugte Ausführungsformen der Erfindung betreffen eine Reduktion einer Prozessporenbildung beim Laserstrahlschweißen von Hairpindrahtenden durch gezielte Positionierung des Emissionsendes. Ausführungsformen der Erfindung sind insbesondere bei der industriellen Großserienfertigung von elektrischen Maschinen für die Elektromobilität verwendbar. Einige Ausführungsformen sind insbesondere bei der Herstellung von Verbindungen von Leiterdrahtenden durch Verschweißen anwendbar, beispielsweise zur Herstellung von Spulenwicklungen von elektrischen Maschinen oder zum Verschalten von elektrischen Maschinen, z.B. zum Anschließen eines Verschaltelements durch Verschweißen von Anschlussdrähten des Verschaltelements an Anschlussdrähte eines Bauteils der elektrischen Maschine. Eine besonders vorteilhafte Verwendung liegt auf dem Gebiet der Herstellung von Hairpin-Statoren, insbesondere für Fahrmotoren von elektrisch angetriebenen Fahrzeugen.

Wie in [1] beschrieben werden dabei eine Vielzahl von Leiterendengruppen, insbesondere Leiterendenpaaren durch Verschweißen verbunden, um einzelne haarnadelförmig gebogene und in ein Blechpaket eingefügte Drahtabschnitte - Hairpins genannt - miteinander zum Bilden einer Spulenwicklung des Stators zu verbinden. Die Schweißverbindungen sollen eine zuverlässige elektrische und mechanische Verbindung sicherstellen. Insbesondere können beim Schweißen mittels Schweißstrahls - z.B. Laserschweißen oder Elektronenstrahlschweißen - Poren in der Schweißperle entstehen, die die Qualität beeinflussen.

Einige Ausführungsformen der Erfindung betreffen die Reduktion der Porenbildung beim Laserstrahlschweißen von Drahtenden in der Fertigung von Flachdrahtstatoren (insbesondere Hairpinstatoren).

Derzeitige Ansätze zur Reduzierung der Porenbildung sind:
- der Einsatz von statischer/dynamischer Strahlformung (z.B. auf dem Markt angeboten durch die Fa. Trumpf unter der Bezeichnung BrightLine Weld)
- Verwendung einer Laserleistungsrampe am Ende des Schweißprozesses
- Verwendung einer Laserspotgeschwindigkeitsrampe am Ende des Schwei ßprozesses
- Defokussierung während des gesamten Schweißprozess oder nur am Prozessende
- Defokussierung nur am Prozessende

Bei der statische/dynamische Strahlformung ist nachteilig, dass sie nicht für alle Lasertypen oder sonstiger Schweißstrahlquellen verwendbar oder verfügbar ist, dass damit der gesamte Schweißprozess verändert wird, dass hohe Kosten für die Systemtechnik entstehen und dass eine Porenreduktion nur bedingt möglich ist, da das Prozessende nicht reproduzierbar kontrolliert werden kann.

Bei der Laserleistungsrampe ist nachteilig, dass durch reduzierte Leistung die Taktzeit erhöht wird und dass eine Porenreduktion nur bedingt möglich ist, da das Prozessende nicht reproduzierbar kontrolliert werden kann.

Bei der Laserspotgeschwindigkeitsendrampe ist nachteilig, dass eine Porenreduktion nur bedingt möglich ist, da das Prozessende nicht reproduzierbar kontrolliert werden kann.

Und auch bei der Defokussierung ist nachteilig, dass eine Porenreduktion nur bedingt möglich ist, da das Prozessende nicht reproduzierbar kontrolliert werden kann.

Bevorzugte Ausführungsformen der Erfindung bieten dagegen eine anlagen- und systemunabhängige Lösung, wie mit minimalem Einsatz an oder gar keiner zusätzlicher Systemtechnik eine Porenbildung am Prozessende zuverlässig und reproduzierbar vermieden werden kann.

Ausführungsformen der Erfindung ermöglichen eine zuverlässige und/oder reproduzierbare Reduktion von Porenbildung und dadurch bedingter Qualitätseinbußen von Schweißverbindungen bei Leiterenden elektrischer Maschinen unter Einsparung von Systemtechnik.

Herausforderungen, die bei der Auffindung vorteilhafter Ausgestaltungen der Erfindung zu überwinden waren, waren z.B.:
- die Möglichkeit der Übertragbarkeit auf alle denkbaren Schweißgeometrien
- das Auffinden einer Anlagen-/Systemtechnikunabhängige Lösung
- eine Beschädigung an einem eventuell vorgesehenen Spannwerkzeug sollte ausgeschlossen/minimiert werden
- bei einigen Ausführungen ergaben sich hohe Anforderungen an die Positionierung eines Laserstrahl auf den zu verschweißenden Drahtenden
- Bei einigen Ausführungsformen war die ideale Position des Emissionsendes zwischen innerhalb des Schmelzbads und Beschädigung eines Spannmittels zu ermitteln

Einige Ausführungsformen der Erfindung sehen vor, das Emissionsende beim Laserstrahlschweißen von Flachdrahtleitern gezielt zu positionieren und dadurch die Porenbildung aus dem Prozessende zu verhindern. Die Lösung kann für alle Laserwellenlängen, zu verschweißenden Materialien, Lasertypen/-klassen und sämtliche Verbindungen (Draht zu Draht, Draht zu Verschaltelement) eingesetzt werden. Einige Ausführungsformen sehen ein präzises Spannen der zu schweißenden Bauteile - insbesondere mittels der in [2] beschriebenen Vorrichtung - und eine exakte Positionierung der Schweißgeometrie vor.

Bei einigen Ausführungsformen wird das Emissionsende so positioniert, dass eine Dampfkapillare (Keyhole) definiert außerhalb des Schmelzbades beendet/geöffnet werden kann.

Bei einigen Ausführungsformen wird hierzu der beispielsweise als Laserstrahl ausgebildete Schweißstrahl ohne Unterbrechung des Schweißprozess an den Rand/außerhalb der Drahtenden bewegt.

Bei einigen Ausführungsformen wird idealerweise die Ausfahrt so positioniert, dass durch eine nicht zentrische Anordnung einer Laserstrahloptik und den Auslenkwinkel des Laserstrahls letzterer das Drahtende unterhalb des Schmelzbades auf der Drahtaußenseite trifft und somit nicht auf ein Spannmittel wie z.B. eine Spannschablone gerichtet wird. Dazu erfolgt insbesondere das Emissionsende auf der der Optik zugewandten Drahtseite.

Bei einigen Ausführungsformen besteht zudem die Möglichkeit, das Emissionsende minimal innerhalb des Schmelzbades nahe an dessen Randbereich/der Kante des Drahtes zu positionieren. Durch die flache Form der Schweißperle nahe der Außenkante des Drahtes können bei Emissionsende gegebenenfalls entstehende Poren ausgasen. Bei dieser Variante wird eine Beschädigung der Spannmittel auch bei nicht ausreichender Positioniergenauigkeit gewährleistet.

Einige Ausführungsformen bieten insbesondere wenigstens einen, mehrere oder alle der folgenden Vorteile:
- Vollständige Reduktion der Prozessporen gegenüber herkömmlichen Methoden
- Einfache Übertragbarkeit auf verschiedene Projekte/Systeme/Anlagen/Bautei le
- Für alle Lasertypen/-wellenlängen oder Strahlquellen verwendbar
- Für unterschiedliche Verbindungen einsetzbar (Draht zu Draht, Draht zu Verschaltelement)
- Keine Taktzeiterhöhung durch zur Reduktion der Porenbildung gedachten Laserleistungs-/Laserspotgeschwindigkeitsrampen/Defokussierung
- Prozessstrategie unabhängig vom zu verschweißenden Material
- Keine zusätzliche/gezielte Systemtechnik notwendig

Einige Ausführungsbeispiele der Erfindung werden im Folgenden anhand der beigefügten Zeichnungen näher erläutert. Darin zeigt:
- Fig. 1: eine schematische Darstellung einer ersten Ausführungsform einer Vorrichtung zum Verschweißen von Leiterenden;
- Fig. 2: eine schematische Darstellung einer zweiten Ausführungsform einer Vorrichtung zum Verschweißen von Leiterenden;
- Fig. 3a: eine Draufsicht auf ein Paar Leiterenden als Beispiel für eine zu Leiterendengruppe mit Leiterenden, die mittels eines Schweißverfahrens mit einer elliptischen Schweißgeometrie zu verschweißen sind;
- Fig. 3b: die Draufsicht wie in Fig. 3a bei einem herkömmlichen Schweißverfahren mit der elliptischen Schweißgeometrie;
- Fig. 3c: die Draufsicht wie in Fig. 3a bei einem Schweißverfahren mit der elliptischen Schweißgeometrie gemäß einem ersten Ausführungsbeispiel der Erfindung;
- Fig. 3d: die Draufsicht wie in Fig. 3a bei einem Schweißverfahren mit der elliptischen Schweißgeometrie gemäß einem zweiten Ausführungsbeispiel der Erfindung;
- Fig. 3e: die Draufsicht wie in Fig. 3a bei einem Schweißverfahren mit der elliptischen Schweißgeometrie gemäß einem dritten Ausführungsbeispiel der Erfindung;
- Fig. 4a: eine Draufsicht auf ein Paar Leiterenden als Beispiel für eine zu Leiterendengruppe mit Leiterenden, die mittels eines Schweißverfahrens mit einer rechteckigen Schweißgeometrie zu verschweißen sind;
- Fig. 4b: die Draufsicht wie in Fig. 4a bei einem herkömmlichen Schweißverfahren mit der rechteckigen Schweißgeometrie;
- Fig. 4c: die Draufsicht wie in Fig. 4a bei einem Schweißverfahren mit der rechteckigen Schweißgeometrie gemäß einem vierten Ausführungsbeispiel der Erfindung;
- Fig. 4d: die Draufsicht wie in Fig. 4a bei einem Schweißverfahren mit der rechteckigen Schweißgeometrie gemäß einem fünften Ausführungsbeispiel der Erfindung;
- Fig. 4e: die Draufsicht wie in Fig. 4a bei einem Schweißverfahren mit der rechteckigen Schweißgeometrie gemäß einem sechsten Ausführungsbeispiel der Erfindung;
- Fig. 5a: eine Draufsicht auf ein Paar Leiterenden als Beispiel für eine zu Leiterendengruppe mit Leiterenden, die mittels eines Schweißverfahrens mit einer geteilten Schweißgeometrie zu verschweißen sind;
- Fig. 5b: die Draufsicht wie in Fig. 5a bei einem herkömmlichen Schweißverfahren mit der geteilten Schweißgeometrie;
- Fig. 5c: die Draufsicht wie in Fig. 5a bei einem Schweißverfahren mit der geteilten Schweißgeometrie gemäß einem siebten Ausführungsbeispiel der Erfindung;
- Fig. 5d: die Draufsicht wie in Fig. 5a bei einem Schweißverfahren mit der geteilten Schweißgeometrie gemäß einem achten Ausführungsbeispiel der Erfindung;
- Fig. 5e: die Draufsicht wie in Fig. 5a bei einem Schweißverfahren mit der geteilten Schweißgeometrie gemäß einem neunten Ausführungsbeispiel der Erfindung;
- Fig. 6a: eine Draufsicht auf ein Paar Leiterenden als Beispiel für eine zu Leiterendengruppe mit Leiterenden, die mittels eines Schweißverfahrens mit einer Spaltschweißung - Linie als Schweißgeometrie - zu verschweißen sind;
- Fig. 6b: die Draufsicht wie in Fig. 6a bei einem herkömmlichen Schweißverfahren mit der Spaltschweißung;
- Fig. 6c: die Draufsicht wie in Fig. 6a bei einem Schweißverfahren mit der Spaltschweißung gemäß einem zehnten Ausführungsbeispiel der Erfindung;
- Fig. 6d: die Draufsicht wie in Fig. 6a bei einem Schweißverfahren mit der Spaltschweißung gemäß einem elften Ausführungsbeispiel der Erfindung;
- Fig. 6e: die Draufsicht wie in Fig. 6a bei einem Schweißverfahren mit der Spaltschweißung gemäß einem zwölften Ausführungsbeispiel der Erfindung;
- Fig. 7: eine Seitenansicht der Leiterendengruppe einer der Fig. 3a-3c, 4a-4c, 5a-5c und 6a-6c bei einem Ende des Schweißvorganges gemäß einer ersten Variante des Schweißverfahrens von Ausführungsbeispielen der Erfindung;
- Fig. 8: eine Seitenansicht der Leiterendengruppe einer der Fig. 3a-3c, 4a-4c, 5a-5c und 6a-6c bei einem Ende des Schweißvorganges gemäß einer zweiten Variante des Schweißverfahrens von Ausführungsbeispielen der Erfindung;
- Fig. 9: eine Seitenansicht der Leiterendengruppe einer der Fig. 3a-3c, 4a-4c, 5a-5c und 6a-6c bei einem Ende des Schweißvorganges gemäß einer dritten Variante des Schweißverfahrens von Ausführungsbeispielen der Erfindung;
- Fig. 10: eine Seitenansicht der Leiterendengruppe einer der Fig. 3a-3c, 4a-4c, 5a-5c und 6a-6c bei einem Ende des Schweißvorganges gemäß einer vierten Variante des Schweißverfahrens von Ausführungsbeispielen der Erfindung; und
- Fig. 11: eine Seitenansicht der Leiterendengruppe einer der Fig. 3a-3c, 4a-4c, 5a-5c und 6a-6c bei einem Ende des Schweißvorganges gemäß einer ersten Variante des Schweißverfahrens von Ausführungsbeispielen der Erfindung.

Im Folgenden werden unter Bezugnahme auf die beigefügten Zeichnungen Ausführungsbeispiele für ein Schweißverfahren näher erläutert. Das Schweißverfahren dient zum Verschweißen von in einer Leiterendengruppe 64 gruppierten Leiterenden 24 eines Bauteils 26 für eine elektrische Maschine, um zumindest ein erstes Leiterende 24.1 der Leiterendengruppe 64 und ein zweites Leiterende 24.2 der Leiterendengruppe 64 in einem Fügebereich 66 zusammen zu fügen. In dem Fügebereich 66 liegen das erste Leiterende 24.1 und das zweite Leiterende 24.2 nebeneinander. Der Fügebereich 66 ist insbesondere derjenige Bereich, der durch den Schweißstrahl 68 zum Bilden eines Schmelzbades 70 abgefahren wird. Bei einigen Ausführungsformen ist das Bauteil ein Stator 8.1, insbesondere ein Hairpin-Stator. Die Leiterenden 24.1, 24.2 sollen zum Beispiel zum Bilden einer Spulenwicklung oder zum Anschließen des Bauteils miteinander verbunden werden. Die Leiterendengruppe 64 kann ein Leiterendenpaar sein oder auch mehr als zwei Leiterenden 24 umfassen.

Um die Qualität der Schweißverbindung hinsichtlich mechanischer Festigkeit und elektrischer Leitfähigkeit zu verbessern, umfasst das Schweißverfahren die Schritte:
a) Richten eines Schweißstrahls 68 auf den Fügebereich 66 der Leiterendengruppe 64, um ein Schmelzbad 70 zu erzeugen, und
b) Verfahren des Schweißstrahles 68 aus dem Fügebereich 66 heraus in einen Randbereich 72 der Leiterendengruppe 64 und dortiges Beenden der Emission des Schweißstrahles 68.

Das Schweißverfahren kann mit vielen unterschiedlichen, an sich vom Systemaufbau her bekannten Schweißvorrichtungen durchgeführt werden, wobei lediglich die Steuerung entsprechend angepasst werden braucht, um die oben genannten Schritte durchzuführen. Dies kann bei computerimplementierten Steuerungen durch entsprechend Programmierung erfolgen.

Zunächst werden hiernach einige Ausführungsformen für eine entsprechend angepasste Schweißvorrichtung 22.1, 22.2 beschrieben, bevor Einzelheiten bevorzugter Ausführungsbeispiele des damit durchführbaren Schweißverfahrens näher erläutert werden.

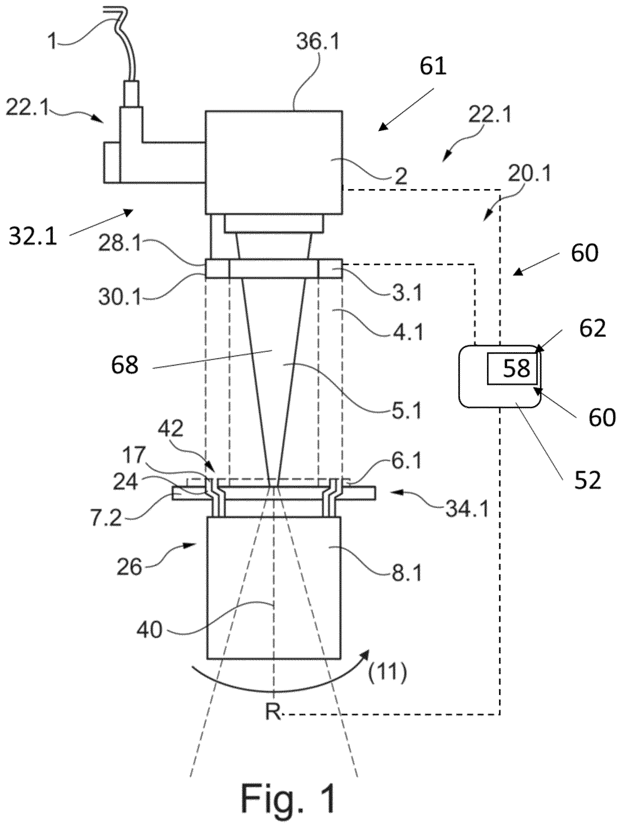

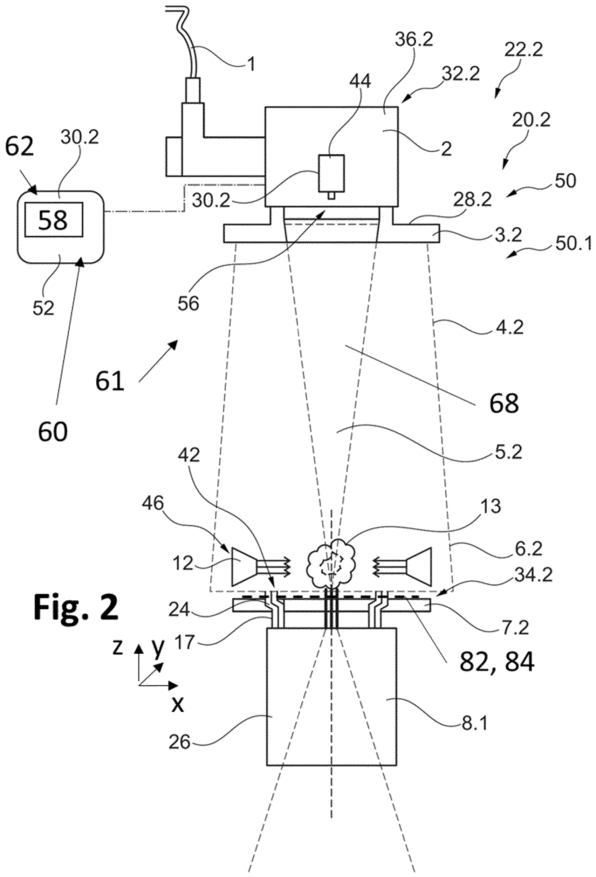

Im Folgenden werden anhand der Fig. 1 und 2 Ausführungsbeispiele für eine Schweißvorrichtung 22.1, 22.2 zum Verschweißen von Leiterenden 24 im Zuge einer Serienfertigung für ein Bauteil 26 einer elektrischen Maschine erläutert. Bei einigen Ausführungsformen ist die Schweißvorrichtung 22.1, 22.2 Teil einer Herstellanlage für einen Stator, wie sie ansonsten im Einzelnen aus der Literaturstelle [1], auf die für weitere Einzelheiten verwiesen wird, bekannt ist.

Die Leiterenden 24 sind an dem Bauteil 26 in einer Leiterendenanordnung 42 angeordnet. Die Schweißvorrichtung 22.1, 22.2 weist eine Positionserkennungseinrichtung 60 zum Erkennen, beispielsweise durch Erfassen und/oder Bestimmen, der Position von vorbestimmten zu verschweißenden Leiterenden 24 der Leiterendenanordnung 42 auf. Die Positionserkennungseinrichtung 60 weist eine berührungslose Erfassungseinrichtung 30.1, 30.2 zum Erfassen der Position und eine computerimplementierte Auswerteinrichtung 58 auf. Weiter weist die Schweißvorrichtung 22.1, 22.2 eine Schweißeinrichtung 61 auf, die dazu eingerichtet ist, einen Schweißstrahl 68 auf die zu verschweißenden Leiterenden 24 in Abhängigkeit von der durch die Positionserkennungseinrichtung 60 erkannten Position zu richten. Die Schweißvorrichtung 22.1, 22.2 weist darüber hinaus eine Bestimmungseinrichtung 62 zum Bestimmen eines Orts 74.1-74.7 eines Prozessendes 74 in Abhängigkeit von der durch die Positionserkennungseinrichtung 60 erkannten Position und Anordnung der Leiterenden 24, 24.1, 24.2 auf. Bei einigen Ausführungsformen sind die Auswerteeinrichtung 58, die Positionserkennungseinrichtung 60 und die Bestimmungseinrichtung 62 als Teile der Steuerung 52, insbesondere mittels eines entsprechenden Programms, implementiert.

Im Folgenden werden Ausführungsbeispiele der Schweißvorrichtung 22.1, 22.2 beschrieben, bei der die berührungslose Erfassungseinrichtung 30.1, 30.2 eine kamerabasierte optische Erfassungseinrichtung ist und bei der die Schweißeinrichtung 61 eine Lasereinrichtung 32.1, 32.2 ist, die einen Laserstrahl 5.1, 5.2 als Schweißstrahl 68 auf die zu verschweißenden Leiterenden 24 richtet. Bei anderen, hier nicht dargestellten Ausführungsformen ist die Schweißeinrichtung 61 als Elektronenstrahlschweißeinrichtung ausgebildet, wobei die berührungslose Erkennungseinrichtung mittels Elektronenstrahlrasterung arbeitet, siehe [6].

In den Fig. 1 und 2 sind zwei Ausführungsbeispiele für eine Schweißanordnung 20.1, 20.2 dargestellt.

Die Schweißanordnung 20.1, 20.2 umfasst jeweils die Schweißvorrichtung 22.1, 22.2 zum Verschweißen von Leiterenden 24, die aus einem Bauteil 26 vorstehen, sowie das zu bearbeitende Bauteil 26.

Bei einem bevorzugten Ausführungsbeispiel ist das Bauteil 26 ein Stator 8.1 eines als Fahrmotor für Kraftfahrzeuge zu verwendenden Elektromotors. Der Stator 8.1 wird gemäß einem Herstellverfahren, wie es im Einzelnen in der Literaturstelle [1] beschrieben und gezeigt ist, hergestellt. Die hier beschriebenen Schweißvorrichtungen 22.1, 22.2 dienen zum Durchführen des in dieser Literaturstelle beschriebenen Schweißvorganges zum Verbinden von Leiterenden 24, die aus dem Stator 8.1 vorstehen, um so Spulenwicklungen des Stators zu bilden. Die Leiterenden 24 sind insbesondere die freien Enden von Hairpins 17, welche in Nuten eines Gehäuses/eines Blechpakets des Stators 8.1 eingeführt worden sind. Entsprechend werden die Leiterenden 24 auch als Pins bezeichnet, ein Paar von miteinander zu verschweißenden Leiterenden 24 wird auch als Pinpaar bezeichnet.

Die Schweißvorrichtung 22.1, 22.2 weist eine Beleuchtungseinrichtung 28.1, 28.2, eine optische Erfassungseinrichtung 30.1, 30.2, eine Lasereinrichtung 32.1, 32.2 und eine Halterung 34.1, 34.2 auf.

Die Beleuchtungseinrichtung 28.1, 28.2 dient zum Beleuchten von Leiterenden 24. Sie kann beispielsweise ein Ringlicht 3.1 mit einem Lichtkegel 4.1 oder ein Flächenlicht 3.2 mit einem Lichtkegel 4.2 aufweisen.

Die berührungslose Erfassungseinrichtung 30.1, 30.2 ist bei den dargestellten Ausführungsbeispielen als optische Erfassungseinrichtung dazu ausgebildet, durch die Beleuchtungseinrichtung 28.1, 28.2 beleuchtete Leiterenden 24 in einer Leiterendenanordnung 42 zu erkennen und deren Position und Anordnung in einem Koordinatensystem zu erfassen. Bei einigen Ausführungsformen ist hierzu eine Bildauswertung an einem Kamerabild - Kamera 44 - vorgesehen. Einige Ausführungsformen nutzen OCT für die Positionserfassung. Wie oben bereits erläutert, kann bei anderen Ausführungsformen der berührungslosen Erfassungseinrichtung 30.1, 30.2 auch eine Abtastung mittels Elektronenstrahl für die Positionserfassung durchgeführt werden.

Bei den dargestellten Ausführungsformen ist die Lasereinrichtung 32.1, 32.2 dazu ausgebildet, einen Laserstrahl 5.1, 5.2 abhängig von der erfassten Position auf die Leiterenden 24 zu richten, um so das Verschweißen der Leiterenden 24 durchzuführen. Bei einigen Ausführungen wird Laserlicht von einem nicht dargestellten Laser durch ein Lichtleitkabel 1 zu einer Laseroptik 2 geleitet. Zum Lenken des Laserstrahls 5.1, 5.2 weist die Lasereinrichtung 32.1, 32.2 eine Scaneinrichtung 36.1, 36.2 auf.

Die Halterung 34.1, 34.2 dient zum Halten des Bauteils 26 und der Leiterenden 24 während des Schweißvorganges. Hierzu weist die Halterung 34.1, 34.2 als Schweißschablone eine Spannvorrichtung 7.2 auf, wie sie z.B. aus der Literaturstelle [2] bekannt ist. Die Halterung 34.1 kann relativ zu der Schweißeinrichtung 61 beispielsweise durch Rotation um eine Achse 40 in eine Rotationsrichtung 11 beweglich sein, um den Schweißstrahl 68 - d.h. z.B. Laserstrahl 5.1, 5.2 - und Leiterenden 24 relativ zueinander zu positionieren, oder auch stationär ausgebildet sein, wobei die relative Positionierung allein durch Bewegung des Schweißstrahls - z. B. Richten des Laserstrahls 5.2 - erfolgt.

Weiter kann die Schweißvorrichtung 2.1, 22.2 eine Strömungserzeugungseinrichtung 46 zum Erzeugen eines Luftvorhanges 6.1, 6.2, beispielsweise mit Luftdüse 12, aufweisen, um Schmauch 13 zu entfernen.

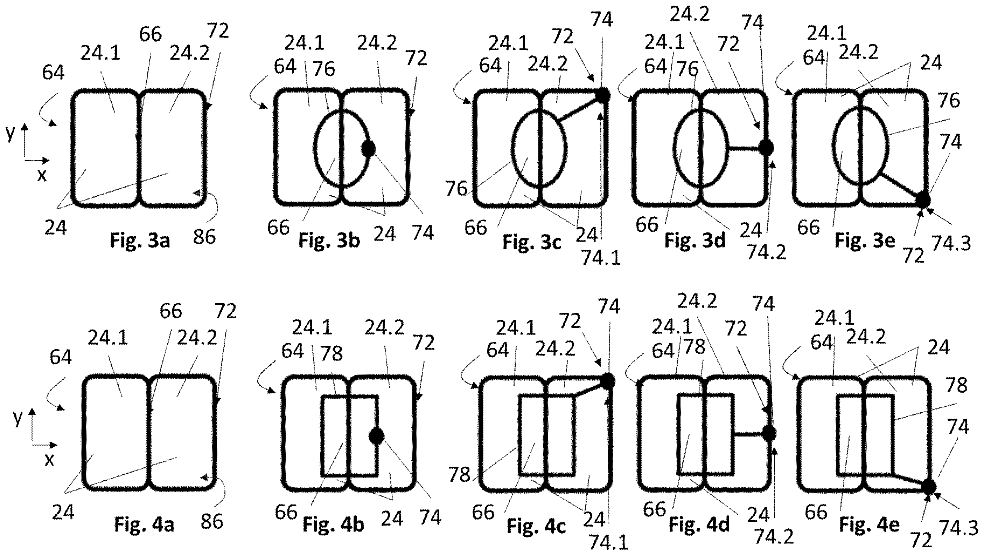

Die Auswerteeinrichtung 58 kann Teil einer computerimplementierten Steuerung 52 der Vorrichtung 22.1, 22.2 sein, die einen Prozessor und einen Speicher aufweist, in dem wenigstens ein Computerprogramm zur Steuerung und Auswertung gespeichert sind. Insbesondere weist das Computerprogramm Anweisungen auf, die die Schweißvorrichtung 22.1, 22.2 dazu veranlassen, das Schweißverfahren durchzuführen, von dem bevorzugte Ausführungsformen im Folgenden anhand der Fig. 3a bis 9 näher erläutert werden. Bei einigen Ausführungsformen ist die Auswerteeinrichtung 58 zum Durchführen einer Bildanalyse eines Bildes der gesamten Leiteranordnung 42 oder eines Teilbereichs davon eingerichtet, um z.B. durch Kantendetektion die Positionen der einzelnen zu verschweißenden Leiterenden 24, insbesondere einzelner Pinpaare, und deren Anordnung zu erfassen.

Das Schweißverfahren kann mit unterschiedlichen Schweißgeometrien durchgeführt werden, von denen einige Beispiele in den Fig. 3a bis 6e dargestellt sind. Die Figuren 3a bis 6e zeigen Beispiele für Schweißgeometrien mit gezielter Positionierung 74.1, 74.2, 74.3 des Emissionsendes. Mehr im Detail zeigen diese Figuren jeweils eine Draufsicht auf die hier als Leiterendenpaar ausgebildete Leiterendengruppe 64, die in den jeweils mit a gekennzeichneten Figuren vor dem Schweißvorgang, in den mit b gekennzeichneten Figuren bei einem Schweißen mit bisherigen, nicht von der Erfindung umfassten Lösungsansätzen und bei den mit c, d, und e gekennzeichneten Figuren am Ende des Schweißvorganges bei unterschiedlichen Ausführungsformen des erfindungsgemäßen Schweißverfahrens in Draufsicht auf die Endflächen dargestellt sind. Der jeweils in den mit b bis e gekennzeichneten Figuren dargestellte schwarz ausgefüllte Punkt zeigt schematisch das Prozessende 74, d.h. das Ende des Schweißvorganges, wo die Emission des Schweißstrahls 68 beendet wird.

Die Figuren 3a bis 3e veranschaulichen die Anwendung des Schweißverfahrens auf eine als Ellipse 76 ausgebildete Schweißgeometrie. Mit anderen Worten wird der Schweißstrahl 68 in dem Fügebereich 66 über eine elliptischen Auftreffzone hinweg gescannt, so dass der elliptisch ausgebildete Fügebereich mit dem Schweißstrahl abgefahren wird. Bei dem bisherigen Lösungsansatz nach Fig. 3b wurde die Emission des Schweißstrahls 68 im Fügebereich 66 beendet. Dies konnte zur Bildung von Poren (Keyhole) in dem Fügebereich mit entsprechender Beeinträchtigung der Qualität der Schweißung führen. Im Gegensatz dazu wird bei den Ausführungsbeispielen gemäß Fig. 3c bis 3e der Schweißstrahl 68 gezielt aus dem Fügebereich 66 heraus in einen Randbereich 72 geführt. Dort wird die Emission des Schweißstrahls beendet. Somit wird das Prozessende 74 gezielt außerhalb des Fügebereichs 66, insbesondere am oder nahe dem Rand, positioniert. Wie die Fig. 3c bis 3e zeigen, kann das Emissionsende an unterschiedlichen Orten 74.1, 74.2, 74.3 am Rand oder nahe dem Rand der Leiterendengruppe 64 liegen. Beispielsweise wird der Schweißstrahl 68 zum Prozessende 74 in einen Eckbereich - Fig. 3c und 3e, bei 74.1 oder 74.3 - oder an einen Randbereich eines Leiterendes 24, 24.1, 24.2 - Fig. 3d, bei 74.2 - verfahren.

Wie die Figuren 4a bis 4e zeigen, lässt sich das gezielte Positionieren 74.1, 74.2, 74.3 des Prozessendes 74 in dem Randbereich 72 auch auf eine als Rechteck 78 ausgebildete Schweißgeometrie übertragen, wo der Schweißstrahl 68 innerhalb eines Rechtecks geführt wird, um das entsprechend Schmelzbad 70 zu erzeugen. Mit anderen Worten wird der Schweißstrahl 68 in dem Fügebereich 66 über eine rechteckige Auftreffzone hinweg gescannt, so dass der dann rechteckig ausgebildete Fügebereich mit dem Schweißstrahl abgefahren wird.

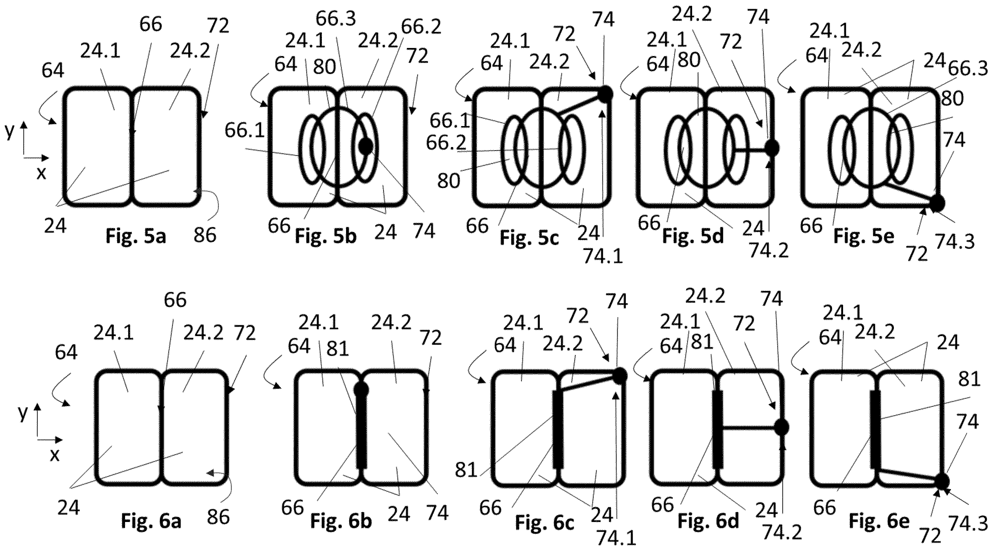

Die Figuren 5a bis 5e zeigen in entsprechender Weise wie Fig. 3a bis 3e für die elliptische und Fig. 4a bis 4e für die rechteckige Schweißgeometrie die Anwendung des Schweißverfahrens auf eine geteilte Geometrie 80, wo der Schweißstrahl 68 in unterschiedlichen Teilbereichen auf dem ersten Leiterende 24.1, auf dem zweiten Leiterende 24.2 und im Fügebereich 66 gerichtet wird, um ein Schmelzbad 70 zu erzeugen. Mit anderen Worten wird mit dem Schweißstrahl 68 ein mehrzoniger Fügebereich 66 mit unterschiedlichen Zonen 66.1, 66.2, 66.3 abgefahren. Auch hier wird der Schweißstrahl 68 am Ende des Schweißvorganges in den Randbereich 72 geführt; wiederrum kann das Prozessende 74 an den oben erwähnten unterschiedlichen Orten 74.1, 74.2, 74.3 am oder nahe dem Rand positioniert werden.

In den Fig. 6a bis 6e ist gezeigt, wie das Prozessende 74 auch bei einer Spaltschweißung mit einer Linie 81 als Schweißgeometrie gezielt am Rand oder nahe dem Rand positioniert werden kann. Mit anderen Worten wird ein linienförmiger Fügebereich 66 mit dem Schweißstrahl 68 abgefahren. Auch hier wird zum Prozessende der Schweißstrahl 68 aus dem Fügebereich 66 heraus zu einem der beispielhaft in Fig. 6c bis 6d gezeigten Orte 74.1 bis 74.3 am oder nahe dem Rand der Leiterendengruppe 64 verfahren, wo die Emission beendet wird.

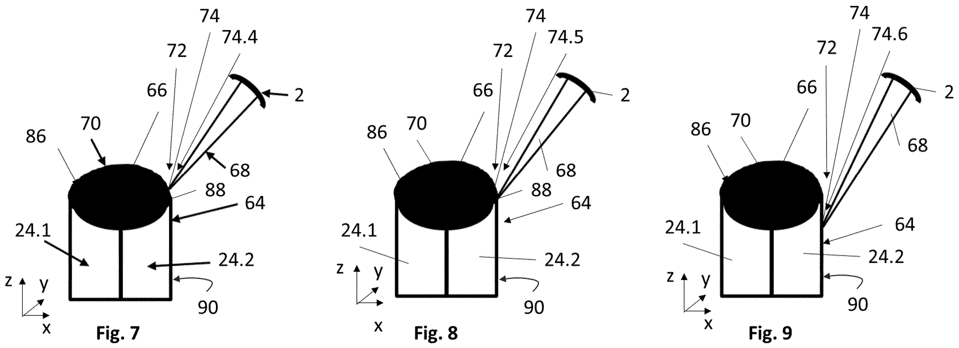

Während in den Fig. 3c bis 3e, 4c bis 4e, 5c bis 5e und 6c bis 6e unterschiedliche Beispiele für die Positionierung 74.1-74.3 des Prozessendes 74 in Draufsicht auf die Endflächen 86 der Leiterenden 24.1, 24.2 (z.B. in Koordinaten der Positionierung in einer x-y-Ebene parallel zu den Endflächen 86) gezeigt sind, sind in den Figuren 7 bis 11 Seitenansichten auf die Leiterendengruppe 64 mit Beispielen für unterschiedliche Varianten der gezielten Positionierung des Prozessendes in der Höhenrichtung (z.B. z-Richtung) dargestellt. Insbesondere zeigen die Figuren 7 bis 9 die Leiterendengruppe 64 mit den zu verschweißenden Leiterenden 24, einem Beispiel für das bei dem Schweißen entstehende Schmelzbad 70, die Laseroptik 2 mit dem Laserstrahl 5.1, 5.2 und unterschiedliche Beispiele für die gezielte Positionierung 74.5-74.7 des Emissionsendes, insbesondere hinsichtlich der z-Richtung (Richtung in Längserstreckung der Leiterenden).

In Draufsicht gesehen, kann das Emissionsende wie in den Fig. 3c bis 3e, 4c bis 4e, 5c bis 5e und 6c bis 6e gezeigt, an einem beliebigen Ort am oder nahe dem Rand der Leiterendengruppe liegen.

Wie in Fig. 7 gezeigt kann das Prozessende 74, 74.5 dabei nahe der Drahtkante eines der Fügepartner (erstes Leiterende 24.1 oder zweites Leiterende 24.2) im Randbereich des Schmelzbades 70 liegen. Beispielsweise wird der Schweißstrahl zum Prozessende 74 auf einen Ort 74.4 auf der Endfläche 86 eines der Leiterenden 24, 24.1, 24.2 nahe deren Kante 88 verfahren.

Fig. 8 zeigt das Beispiel der Positionierung 74.6 des Prozessendes 74 auf der Kante 88.

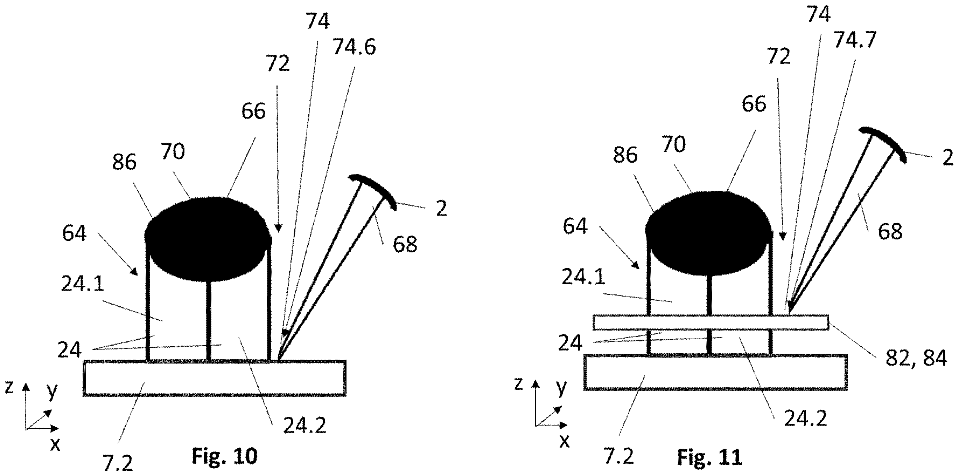

Fig. 9 bis 11 zeigen Beispiele der Positionierung 74.7, 74.6, 74.7 des Prozessendes außerhalb des Schmelzbades 70. In Fig. 9 ist das Prozessende 74 an einer Seitenfläche 90 eines der Fügepartner positioniert. In Fig. 10 ist das Prozessende 74 außerhalb der Leiterenden 24.1, 24.2, z.B. auf der Spannvorrichtung 7.2, wie z.B. einer Spannschablone positioniert. Hierzu wird der Schweißstrahl 68 so verfahren, dass er außerhalb der Leiterendengruppe 64 auf die Spannvorrichtung 7.2 trifft, wo die Emission beendet wird.

Bei dem Beispiel der Fig. 11 ist hierzu eine Schutzabdeckung 82 für die Spannvorrichtung 7.2 vorgesehen, wie insbesondere ein gesondert vorgesehenes Opferblech 84, dessen Lage auch in Fig. 2 angedeutet ist.

Das Beenden der Emission kann auf unterschiedliche Weise erfolgen. Beispielsweise wird der Schweißstrahl 68 am Prozessende abgeschaltet. Alternativ oder zusätzlich kann auch eine Blende (nicht dargestellt) in den Schweißstrahl eingefahren werden.

Nachdem eine Leiterendengruppe 64 der Leiterendenanordnung 42 auf diese Weise verschweißt worden ist, wird der Vorgang für jede weitere Leiterendengruppe 64 der Leiterendenanordnung 42, in der Leiterenden zu verschweißen sind, wiederholt.

Hierzu wird jeweils die Position der einzelnen Leiterenden 24, 24.1, 24.2 und deren Anordnung erkannt, um so das Verschweißen und auch das gezielte Positionieren des Prozessendes entsprechend der erkannten Leiterendenposition und - anordnung durchzuführen.

### Bezugszeichenliste:

- 1: Lichtleitkabel
- 2: Laseroptik (Scanner)
- 3.1: Ringlicht
- 3.2: Flächenlicht
- 4.1: Lichtkegel Ringlicht
- 4.2: Lichtkegel Flächenlicht
- 5.1: Laserstrahl
- 5.2: Laserstrahl
- 6.1: Luftvorhang
- 6.2: Luftvorhang
- 7.2: Spannvorrichtung
- 8.1: Stator
- 11: Rotationsrichtung
- 12: Luftdüse
- 13: Rauchgas / Schmauch
- 17: Hairpins
- 20.1: Schweißanordnung
- 20.2: Schweißanordnung
- 22.1: Schweißvorrichtung
- 22.2: Schweißvorrichtung
- 24: Leiterenden
- 24.1: erstes Leiterende
- 24.2: zweites Leiterende
- 26: Bauteil
- 28.1: Beleuchtungseinrichtung
- 28.2: Beleuchtungseinrichtung
- 30.1: optische Erfassungseinrichtung
- 30.2: optische Erfassungseinrichtung
- 32.1: Lasereinrichtung
- 32.2: Lasereinrichtung
- 34.1: Halterung
- 34.2: Halterung
- 36.1: Scaneinrichtung
- 36.2: Scaneinrichtung
- 40: zentrale Achse
- 42: Leiterendenanordnung
- 44: Kamera
- 46: Strömungserzeugungseinrichtung
- 52: Steuerung
- 58: Auswerteeinrichtung
- 60: Positionserkennungseinrichtung
- 61: Schweißeinrichtung
- 62: Bestimmungseinrichtung
- 64: Leiterendengruppe
- 66: Fügebereich
- 66.1: erste Zone des Fügebereichs
- 66.2: zweite Zone des Fügebereichs
- 66.3: dritte Zone des Fügebereichs
- 68: Schweißstrahl
- 70: Schmelzbad
- 72: Randbereich
- 74: Prozessende
- 74.1: Ort der gezielten Positionierung des Prozessendes (erstes Beispiel)
- 74.2: Ort der gezielten Positionierung des Prozessendes (zweites Beispiel)
- 74.3: Ort der gezielten Positionierung des Prozessendes (drittes Beispiel)
- 74.4: Ort der gezielten Positionierung des Prozessendes (viertes Beispiel)
- 74.5: Ort der gezielten Positionierung des Prozessendes (fünftes Beispiel)
- 74.6: Ort der gezielten Positionierung des Prozessendes (sechstes Beispiel)
- 74.7: Ort der gezielten Positionierung des Prozessendes (siebtes Beispiel)
- 76: Ellipse
- 78: Rechteck
- 80: geteilte Geometrie
- 81: Linie
- 82: Schutzabdeckung
- 84: Opferblech
- 86: Endfläche
- 88: Kante
- 90: Seitenfläche

## Patentansprüche

1. Schweißverfahren zum Verschweißen von in einer Leiterendengruppe (64) gruppierten Leiterenden (24, 24.1, 24.2) eines Bauteils (26) für eine elektrische Maschine, wobei zumindest ein erstes Leiterende (24, 24.1) der Leiterendengruppe (64) und ein zweites Leiterende (24, 24.2) der Leiterendengruppe (64) in einem Fügebereich (66) der Leiterendengruppe (64), wo das erste Leiterende (24.1) und das zweite Leiterende (24.2) nebeneinander liegen, zusammenzufügen sind, umfassend:
a) Richten eines Schweißstrahls (68) auf den Fügebereich (66) der Leiterendengruppe (64), um ein Schmelzbad (70) zu erzeugen, und
b) Verfahren des Schweißstrahles (68) aus dem Fügebereich (66) heraus in einen Randbereich (72) der Leiterendengruppe (64) und dortiges Beenden der Emission des Schweißstrahles (64).

2. Schweißverfahren nach Anspruch 1, **gekennzeichnet durch** den Schritt: Positionierung der zu verschweißenden Leiterenden (24, 24.2, 24.2) der Leiterendengruppe **durch** Verspannen mittels einer Spannschablone (7.2).

3. Schweißverfahren nach Anspruch 1 oder 2, **dadurch gekennzeichnet, dass** als Schweißstrahl (68) ein Laserstrahl (5.1, 5.2) auf die Leiterendengruppe (64) gerichtet wird.

4. Schweißverfahren nach einem der voranstehenden Ansprüche, **dadurch gekennzeichnet,**
**dass** Schritt a) umfasst:
Abfahren des Fügebereichs (66) mittels des Schweißstrahls (68), wobei der Fügebereich (66) elliptisch, polygonförmig, insbesondere rechteckförmig, mehrzonig oder linienförmig ist.

5. Schweißverfahren nach einem der voranstehenden Ansprüche, **dadurch gekennzeichnet,**
**dass** Schritt b) wenigstens einen oder mehrere der Schritte umfasst:
b1.1) Verfahren des Schweißstrahls (68) in einen Eckbereich der Leiterendengruppe (64);
b1.2) Verfahren des Schweißstrahls (68) in einen Randbereich des Schmelzbads (70);
b1.3) Verfahren des Schweißstrahls (68) in einen Randbereich eines Leiterendes (24, 24.1, 24.2) der Leiterendengruppe (64);
b1.4) Verfahren des Schweißstrahls (68) in einen Randbereich einer Endfläche (86) eines Leiterendes (24, 24.1, 24.2) der Leiterendengruppe;
b1.5) Verfahren des Schweißstrahls (68) auf eine Kante (88) eines Leiterendes (24, 24.1, 24.2);
b1.6) Verfahren des Schweißstrahls (68) so, dass dieser auf einer Seitenfläche (90) der Leiterendengruppe (64), insbesondere eines Leiterendes (24, 24.1, 24.2) derselben, auftrifft;
b1.7) Verfahren des Schweißstrahls (68) so, dass dieser außerhalb der Leiterendengruppe (64) auf eine Spannschablone auftrifft;
b1.8) Verfahren des Schweißstrahls (68) so, dass dieser außerhalb der Leiterendengruppe (64) auf eine dafür angebrachte Schutzabdeckung (82), insbesondere ein Opferblech (84), trifft.

6. Schweißverfahren nach einem der voranstehenden Ansprüche, **dadurch gekennzeichnet,**
**dass** Schritt b) wenigstens einen oder mehrere der Schritte umfasst:
b2.1) Einfahren einer Blende in den Schweißstrahl;
b2.2) Abschalten des Schweißstrahls.

7. Schweißverfahren nach einem der voranstehenden Ansprüche, **gekennzeichnet durch** Wiederholen der Schritte a) und b) zum Verschweißen von Leiterenden (24, 24.1, 24.2) einer weiteren Leiterendengruppe (64) des Bauteils (26).

8. Schweißverfahren nach einem der voranstehenden Ansprüche, **gekennzeichnet durch** den vor Schritt a) durchzuführenden Schritt:
0) Erkennen von Position und/oder Anordnung der zu verschweißenden Leiterenden (24, 24.1, 24.2) der Leiterendengruppe (64),
sowie **durch** den Schritt:
1) Bestimmen des Orts (74.1-74.5) des Beendens der Emission des Schweißstrahls (68) abhängig von der in Schritt 0) erkannten Position und/oder Anordnung.

9. Verfahren zum Herstellen einer Spulenwicklung eines Hairpin-Stators, **gekennzeichnet durch** Bilden der Spulenwicklung aus einer Vielzahl von haarnadelförmigen Leiterabschnitten, wobei Leiterenden (24, 24.1, 24.2) der Leiterabschnitte mittels eines Schweißverfahrens nach einem der voranstehenden Ansprüche verbunden werden.

10. Schweißvorrichtung (22.1, 22.2) zum Verschweißen von in einer Leiterendengruppe (64) gruppierten Leiterenden (24, 24.1, 24.2) eines Bauteils (26) für eine elektrische Maschine, wobei zumindest ein erstes Leiterende (24, 24.1) der Leiterendengruppe (64) und ein zweites Leiterende (24, 24.2) der Leiterendengruppe (64) in einem Fügebereich (66) der Leiterendengruppe (64), wo das erste Leiterende (24, 24.1) und das zweite Leiterende (24, 24.2) nebeneinander liegen, zusammenzufügen sind, wobei die Schweißvorrichtung (22.1, 22.2) umfasst:
eine Schweißeinrichtung (61), mit der ein Schweißstrahl (68) auf die Leiterendengruppe (64) gerichtet werden kann, und eine Steuerung, die dazu eingerichtet ist, die Schweißeinrichtung (61) zum Richten des Schweißstrahls (68) auf den Fügebereich (66) der Leiterendengruppe (64), um ein Schmelzbad (70) zu erzeugen, und zum Verfahren des Schweißstrahles (68) aus dem Fügebereich (66) heraus in einen Randbereich (72) der Leiterendengruppe (64) und zum dortigen Beenden der Emission des Schweißstrahles (68) anzusteuern.

11. Schweißvorrichtung (22.1, 22.2) nach Anspruch 10, **gekennzeichnet durch** wenigstens eine oder mehrere der folgenden Einheiten:
11.1 eine Halterung (34.1, 34.2) für das Bauteil (26), aus dem die zu verbindenden Leiterenden (24, 24.2, 24.2) in einer Leiterendenanordnung (42) herausstehen;
11.2 eine Schweißschablone zur Positionierung der Leiterenden (24, 24.2, 24.2);
11.3 eine Positionserkennungseinrichtung (60), die zum Erkennen von Position und/oder Anordnung der zu verschweißenden Leiterenden (24, 24.1, 24.2) der Leiterendengruppe (64) eingerichtet ist;
11.4 eine Bestimmungseinrichtung (62), die zum Bestimmen des Orts (74.1-74.7) des Beendens der Emission des Schweißstrahls (68), insbesondere in Abhängigkeit von der **durch** die Positionserkennungseinrichtung (60) erkannten Position und/oder Anordnung, eingerichtet ist.

12. Schweißvorrichtung (22.1, 22.2) nach einem der Ansprüche 10 oder 11, **dadurch gekennzeichnet,**
**dass** die Schweißeinrichtung (61) ausgewählt ist aus der Gruppe, die eine Lasereinrichtung (32.1, 32.2) zum Richten eines Laserschweißstrahls (5.1, 5.2) auf die zu verschweißenden Leiterenden (24, 24.1, 24.2) und eine Elektronenstrahlschweißeinrichtung zum Richten eines Elektronenstrahls auf die zu verschweißenden Leiterenden (24, 24.1, 24.2) umfasst.

13. Schweißvorrichtung (22.1, 22.2) nach einem der Ansprüche 10 bis 12, **dadurch gekennzeichnet,**
**dass** die Steuerung (52) dazu ausgebildet ist, die Schweißeinrichtung (61) zum Durchführen des Schweißverfahrens nach einem der Ansprüche 1 bis 8 zu veranlassen.

14. Herstellanlage zum Herstellen eines Hairpin-Stators, umfassend eine Schweißvorrichtung (22.1, 22.2) nach einem der Ansprüche 10 bis 13.

15. Computerprogramm umfassend Anweisungen, die eine Schweißvorrichtung (22.1, 22.2) nach einem der Ansprüche 10 bis 13 dazu veranlassen, das Verfahren nach einem der Ansprüche 1 bis 8 durchzuführen.
